# EUROPÄISCHE PATENTANMELDUNG

(11) **EP 1 912 048 A1**
(43) Veröffentlichungstag der Anmeldung: **16.04.2008**
(21) Anmeldenummer: 07117681.2
(22) Anmeldetag: 01.10.2007
(51) Int. Cl.: G01G 23/00

(54) **Überlastblock für eine Wägezelle und Wägezellenvorrichtung**

(30) Priorität: 11.10.2006 DE 102006050228
(71) Anmelder: Bizerba GmbH & Co. KG, 72336 Balingen (DE)
(72) Erfinder: Conzelmann, René, 72393, Burladingen (DE)
(74) Vertreter: Hoeger, Stellrecht & Partner Patentanwälte

(57) **Zusammenfassung**

Bei einem Überlastblock für eine Wägezelle, umfassend ein Krafteinleitungselement zur kraftwirksamen Verbindung mit einer Last, und ein Kraftausleitungselement zur kraftwirksamen Verbindung mit der Wägezelle bereitzustellen, wobei zwischen dem Krafteinleitungselement und dem Kraftausleitungselement ein Freiraum angeordnet ist und das Krafteinleitungselement relativ zum Kraftausleitungselement beweglich ist, ist mindestens eine Blattfeder vorgesehen, welche an dem Krafteinleitungselement oder dem Kraftausleitungselement angeordnet ist, und eine Abstützungseinrichtung, durch welche die mindestens eine Blattfeder an dem Kraftausleitungselement oder an dem Krafteinleitungselement abgestützt ist.

## Beschreibung

Die Erfindung betrifft einen Überlastblock für eine Wägezelle, umfassend ein Krafteinleitungselement zur kraftwirksamen Verbindung mit einer Last, und ein Kraftausleitungselement zur kraftwirksamen Verbindung mit der Wägezelle, wobei zwischen dem Krafteinleitungselement und dem Kraftausleitungselement ein Freiraum angeordnet ist und das Krafteinleitungselement relativ zum Kraftausleitungselement beweglich ist.

Die Erfindung betrifft ferner eine Wägezellenvorrichtung, umfassend eine Wägezelle und eine Überlastschutzvorrichtung.

Üblicherweise muss darauf geachtet werden, dass einer Wägezelle keine zu große Kraft zugeführt wird und insbesondere keine Kraft zugeführt wird, die zu einer plastischen Verformung eines beweglichen Teils der Wägezelle führen kann. Über einen Überlastblock lässt sich eine entsprechende Überlastschutzsicherung ausbilden.

Aus der DE 28 30 345 C3 ist eine Überlastsicherung für eine Waage bekannt, deren Waagschale über einen Waagschalenträger am oberen Ende eines mit Wegarmen Messwandler gekoppelten, parallel geführten Lastaufnehmer gekoppelt ist. Die Überlastsicherung weist eine zwischen Waagschale und Lastaufnehmer angeordnete Hilfsführung auf, deren Bewegungsbereich nach oben durch einen Hilfsanschlag begrenzt ist. Ferner ist mindestens ein vorgespanntes Federelement vorgesehen, durch dessen Federkraft der Waagschalenträger in die durch den Hilfsanschlag vorgegebene Stellung gedrückt wird und dessen Federweg größer ist als der freie Weg zwischen der Waagschale und einem zugehörigen Anschlag am Waagschalengehäuse bzw. zwischen einem Vorsprung am Waagschalenträger und dem Gehäuse, wobei die Hilfsführung als Parallelführung mit übereinander angeordneten Lenkern ausgebildet und die durch die Vorspannung des Federelements oder der Federelemente erzeugte Federkraft geringfügig größer ist als die Kraft, die die Höchstlast auf die Waagschale ausübt. Die übereinander angeordnete Lenkern weisen Gelenklager auf und die Hilfsparallelführung stützt sich auf mindestens einer Feder ab, die im Freiraum der übereinander angeordneten Lenker der Hilfsparallelführung angeordnet ist. Die Hilfsparallelführung ist durch einen zur Vertikalachse des Lastaufnehmers achsparallel verlaufenden Waagschalenträger sowie durch die mit diesem und dem Lastaufnehmer verbundenen Oberlenker und Unterlenker gebildet, wobei das die Waagschale aufnehmende Ende des Waagschalenträgers in der Nähe der Systemachse des Lastaufnehmers endet.

Aus der US 4,653,599 ist eine Kraftmesszelle bekannt, welche Überlastschutzmittel aufweist. Die Überlastschutzmittel umfassen ein Sperrteil.

Aus der US 5,721,398 ist eine Überlastschutzvorrichtung für eine Präzisionswaage bekannt, welche mindestens eine Feder zum Vorspannen von Führungselementen aufweist. Die Führungselemente bilden zusammen mit Lastaufnehmermitteln eine starre Einheit, wenn eine Last auf die Waage wirkt, die innerhalb eines Lastbereichs der Waage liegt.

Der Erfindung liegt die Aufgabe zugrunde, einen Überlastblock der eingangs genannten Art bereitzustellen, welcher auf einfache Weise herstellbar und auf einfache Weise einsetzbar ist.

Diese Aufgabe wird bei dem eingangs genannten Überlastblock erfindungsgemäß dadurch gelöst, dass mindestens eine Blattfeder vorgesehen ist, welche an dem Krafteinleitungselement oder an dem Kraftausleitungselement angeordnet ist, und eine Abstützungseinrichtung vorgesehen ist, durch welche die mindestens eine Blattfeder an dem Kraftausleitungselement oder an dem Krafteinleitungselement abgestützt ist.

Der Überlastblock lässt sich auf einfache Weise insbesondere als Monoblock herstellen, wobei sich die Blattfeder auf einfache Weise an dem Überlastblock positionieren lässt. Insbesondere lässt sie sich einstückig mit dem Krafteinleitungselement bzw. Kraftausleitungselement verbinden.

Über die Abstützungseinrichtung lässt sich eine Vorspannung der Blattfeder auf einfache Weise einstellen. Der Überlastblock kann auch auf einfache Weise an verschiedene Wägezellen angepasst werden.

Der Überlastblock und eine Kombination aus Überlastblock und Wägezelle lässt sich mit geringer Breite realisieren, so dass sie auch bei engen Raumverhältnissen einsetzbar ist.

Die mindestens eine Blattfeder ist über die Abstützungseinrichtung entweder an dem Kraftausleitungselement abgestützt, oder an dem Krafteinleitungselement abgestützt. Im ersten Falle ist die mindestens eine Blattfeder an dem Krafteinleitungselement angeordnet. Im letzten Falle ist sie an dem Kraftausleitungselement angeordnet. Es ist dabei grundsätzlich auch möglich, dass mehrere Blattfedern vorhanden sind, wobei unterschiedliche Blattfedern an unterschiedlichen Elementen des Überlastblocks abgestützt sein können.

Insbesondere ist die mindestens eine Blattfeder einstückig am Krafteinleitungselement oder am Kraftausleitungselement angeordnet. Der Überlastblock lässt sich dadurch auf einfache Weise fertigen und auch montieren.

Günstig ist es, wenn die mindestens eine Blattfeder von dem Kraftausleitungselement oder von dem Krafteinleitungselement weg beweglich ist. Dadurch kann, wenn genügend große Kräfte auf das Krafteinleitungselement wirken, das Krafteinleitungselement auf das Kraftausleitungselement zu bewegt werden. Dadurch wiederum ist es auf einfache Weise möglich, wenn eine Schwellenkraft erreicht wird und eine Anschlagposition erreicht ist, Kräfte unter Umgehung des Kraftausleitungselements von dem Krafteinleitungselement abzuleiten. Dadurch wiederum ist es möglich, Kräfte von der Wägezelle abzuhalten und damit diese gegen Überlast zu schützen.

Günstig ist es, wenn die mindestens eine Blattfeder unterhalb eines Krafteinleitungsbereichs des Krafteinleitungselements angeordnet ist. Dadurch lässt sich eine Art von Gegenbewegung zwischen dem Krafteinleitungselement und der Blattfeder erreichen, und zwar insbesondere, wenn die auf den Krafteinleitungsbereich wirkende Kraft größer ist als die Vorspannungskraft der mindestens einen Blattfeder. Durch die wirkende Kraft wird das Krafteinleitungselement nach unten auf das Kraftausleitungselement zu gedrückt. Wenn die mindestens eine Blattfeder an dem Krafteinleitungselement angeordnet ist und sich über die Abstützungseinrichtung an dem Kraftausleitungselement abstützt, wird diese in Richtung des Krafteinleitungselements von dem Kraftausleitungselement weg gebogen. Wenn die mindestens eine Blattfeder an dem Kraftausleitungselement angeordnet ist und sich über die Abstützungseinrichtung an dem Krafteinleitungselement abstützt, wird die mindestens eine Blattfeder bei einer Verformung des Krafteinleitungselements unter Zubewegung auf das Kraftausleitungselement in Richtung des Kraftausleitungselements zu gebogen und damit von dem Krafteinleitungselement weg gebogen. In beiden Fällen lässt sich, wenn eine bestimmte Überlastschwellenkraft erreicht ist, eine Anschlagposition für das Krafteinleitungselement erreichen.

Insbesondere überlappt dann die Projektion der mindestens einen Blattfeder in einer Krafteinleitungs-Gegenrichtung auf den Krafteinleitungsbereich mindestens teilweise mit dem Krafteinleitungsbereich.

Günstig ist es, wenn das Krafteinleitungselement ein vorderes Stirnende aufweist, welches über ein vorderes Stirnende des Kraftausleitungselements hinausragt. Dadurch lässt sich auf einfache Weise eine Anschlageinrichtung an dem Krafteinleitungselement positionieren. Weiterhin lässt sich der Überlastblock und damit auch eine Kombination aus Überlastblock und Wägezelle mit geringen Querabmessungen ausbilden, da die Anschlageinrichtung nicht seitlich bezogen auf die Wägezelle an dem Überlastblock positioniert werden muss.

Aus dem gleichen Grund ist es günstig, wenn ein vorderes Stirnende der mindestens einen Blattfeder gegenüber dem vorderen Stirnende des Krafteinleitungselements zurückgesetzt ist.

Ganz besonders vorteilhaft ist es, wenn an oder Nähe des vorderen Endes des Krafteinleitungselements eine Anschlageinrichtung angeordnet ist, durch welche die Beweglichkeit des Krafteinleitungselements auf das Kraftausleitungselement zu sperrbar ist. Dadurch lässt sich die Kraft begrenzen, die über das Kraftausleitungselement auf die Wägezelle ausgeübt wird. Durch Anschlagen der Anschlageinrichtung lassen sich Kräfte von dem Kraftausleitungselement und damit von der Wägezelle ableiten.

Günstig ist es, wenn die Anschlageinrichtung an einem Bereich des Krafteinleitungselements angeordnet ist, welcher über das Kraftausleitungselement hinausragt. Dadurch ist eine Ausbildung mit geringen Querabmessungen möglich, wobei die Anschlageinrichtung in Längsrichtung auf das vordere Ende des Kraftausleitungselements folgt.

Insbesondere ist die Anschlageinrichtung so ausgebildet, dass bei Anschlag Kräfte von dem Krafteinleitungselement unter Umgehung des Kraftausleitungselements ableitbar sind. Dadurch lässt sich eine Wägezelle und ein überlastsensitiver Teil der Wägezelle vor Überlast schützen.

Es ist dabei vorteilhaft, wenn die Anschlageinrichtung an oder in der Nähe eines Krafteinleitungsbereichs des Krafteinleitungselements angeordnet ist. Es ist dann möglich, über die Anschlageinrichtung Kräfte von der Krafteinleitungseinrichtung direkt abzuleiten unter Umgehung des Kraftausleitungselements.

Günstig ist es, wenn die Anschlageinrichtung eine oder mehrere Anschlagelemente aufweist, deren Abstand zu dem Krafteinleitungselement einstellbar ist. Dadurch lässt sich einstellen, bei welcher Auslenkung des Krafteinleitungselements relativ zum Kraftausleitungselement ein Anschlag erfolgt. Der Überlastblock ist dann an unterschiedliche Wägezellen auf einfache Weise anpassbar.

Vorteilhaft ist es, wenn Anschlagelemente symmetrisch zu einer Mittelebene des Überlastblocks angeordnet sind. Dadurch erhält man einen Schutz gegenüber Torsion.

Ganz besonders vorteilhaft ist es, wenn die Anschlageinrichtung so ausgebildet ist, dass ein Überlastschutz sowohl gegenüber Druckkräften als auch gegenüber Zugkräften erreicht ist. Durch den Überlastschutz gegenüber zu großen Druckkräften wird gewährleistet, dass eine Wägezelle keine zu großen Kräfte erfährt. Durch einen Überlastschutz gegenüber zu großen Zugkräften wird garantiert, dass beispielsweise das Krafteinleitungselement keine zu großen Zugkräfte erfährt. Zugkräfte können beispielsweise dadurch entstehen, wenn an einem Lastaufnehmer, welcher mit dem Krafteinleitungselement verbunden ist, gezogen wird. Beispielsweise umfasst die Anschlageinrichtung ein oder mehrere Anschlagelemente, welche für eine Sperrung der Beweglichkeit des Krafteinleitungselements bezüglich des Kraftausleitungselements sorgen, wenn zu große Zugkräfte ausgeübt werden.

Bei einer fertigungstechnisch einfachen Ausführungsform ist das mindestens eine Anschlagelement durch eine Mutter auf einem Gewinde gebildet. Je nach Stellung der Mutter auf dem Gewinde ergeben sich unterschiedliche Anschlagpositionen.

Ganz besonders vorteilhaft ist es, wenn die mindestens eine Blattfeder vorgespannt ist. Es lässt sich dadurch erreichen, dass bei Überschreiten der Vorspannungskraft das Krafteinleitungselement auf das Kraftausleitungselement zu bewegbar ist. Die Vorspannungskraft wiederum ist so gewählt, dass sie ein Maß für diejenige Kraft ist, bei welcher der Überlastschutz wirken soll.

Insbesondere ist die mindestens eine Blattfeder so vorgespannt, dass sie mittels der Abstützungseinrichtung eine Kraft auf das Kraftausleitungselement oder auf das Krafteinleitungselement ausübt. Sie wird dadurch in Richtung des Krafteinleitungselements nach oben gedrückt.

Insbesondere ist die mindestens eine Blattfeder mittels der Abstützungseinrichtung vorgespannt. Eine solche Vorspannung lässt sich auf einfache Weise erreichen.

Ganz besonders vorteilhaft ist es, wenn die Vorspannungskraft der mindestens einen Blattfeder einstellbar ist und insbesondere über die Abstützungseinrichtung einstellbar ist. Dadurch lässt sich der Überlastblock an unterschiedliche Wägezellen anpassen. Insbesondere lässt sich die Kraftschwelle, bei welcher der Überlastschutz wirken soll, einstellen.

Bei einer fertigungstechnisch einfachen Ausführungsform weist die Abstützungseinrichtung eine oder mehrere Schrauben auf, wobei ein Schraubenende auf das Kraftausleitungselement oder das Krafteinleitungselement wirkt.

Es ist günstig, wenn die mindestens eine Blattfeder einen verdickten Bereich zur Fixierung der Abstützungseinrichtung aufweist. Dadurch wird ein Materialbereich bereitgestellt, welcher beispielsweise zur Fixierung von Schrauben dienen kann.

Günstig ist es, wenn zwischen der mindestens einen Blattfeder und einem Bereich des Krafteinleitungselements oder einem Bereich des Kraftausleitungselements unterhalb eines Krafteinleitungsbereichs des Krafteinleitungselements ein Freiraum angeordnet ist. In diesem Freiraum ist die mindestens eine Blattfeder beweglich. Dadurch wiederum wird es ermöglicht, dass das Krafteinleitungselement bei genügend großer Lastkraft auf das Kraftausleitungselement zu beweglich ist.

Ganz besonders vorteilhaft ist es, wenn eine Sperreinrichtung vorgesehen ist, welche die Wegbewegung des Krafteinleitungselements vom Kraftausleitungselement sperrt. Durch eine vorgespannte Blattfeder, welche sich an dem Kraftausleitungselement abstützt und an dem Krafteinleitungselement angeordnet ist, wird eine Kraft auf das Krafteinleitungselement ausgeübt, welche bestrebt ist, diese von dem Kraftausleitungselement weg zu bewegen. Durch die Sperreinrichtung wird die Wegbeweglichkeit gesperrt, so dass ohne wirkende Lastkraft das Krafteinleitungselement definiert und insbesondere parallel zum Kraftausleitungselement positioniert ist.

Ganz besonders vorteilhaft ist es, wenn das Krafteinleitungselement einstückig mit dem Kraftausleitungselement verbunden ist. Dadurch lässt sich der entsprechende Überlastblock auf einfache und kostengünstige Weise herstellen.

Insbesondere ist dann ein Verbindungsbereich vorgesehen, welcher das Krafteinleitungselement und das Kraftausleitungselement verbindet und durch welchen Kräfte von dem Krafteinleitungselement zum Kraftausleitungselement leitbar sind. In einem "normalen Arbeitsbereich" des Überlastblocks, bei dem eine Kraft wirkt, welche unterhalb der Vorspannungskraft der mindestens einen Blattfeder liegt, definiert der Überlastblock einen starren Ausleger. Es werden Kräfte von einem Krafteinleitungsbereich des Krafteinleitungselements über den Verbindungsbereich zu dem Kraftausleitungselement abgeleitet, von welchem aus sie in die Wägezelle eingeleitet werden können.

Insbesondere begrenzt der Verbindungsbereich den Freiraum zu einer Seite hin.

Ganz besonders vorteilhaft ist es, wenn das Krafteinleitungselement so ausgebildet ist, dass die Bewegungskurve eines Krafteinleitungsbereichs des Krafteinleitungselements im Wesentlichen eine Gerade ist. Dadurch lässt sich eine definierte Zubewegung des Krafteinleitungselements auf das Kraftausleitungselement erreichen. Beispielsweise weist das Krafteinleitungselement eine Ausnehmung auf, welche so ausgestaltet ist, dass eine definierte und insbesondere geradlinige Zubewegung des Krafteinleitungselements auf das Kraftausleitungselement erreicht ist.

Bei einem Ausführungsbeispiel weist die Ausnehmung einen ersten Bereich und einen zweiten Bereich auf, welche durch einen Trennbereich verbunden sind, wobei der erste Bereich und der zweite Bereich einen größeren Querschnitt als der dritte Bereich aufweisen. Die Ausnehmung hat beispielsweise die Form eines "Hundeknochens".

Günstigerweise umfasst der Überlastblock einen Arbeitsbereich, bei dem bei Überschreiten einer Kraftschwelle Kräfte von einem kraftsensitiven Bereich der Wägezelle abgehalten werden. Der Überlastblock sorgt dann bei Überschreiten einer bestimmten Kraftschwelle dafür, dass ein anderer Kraftableitungsweg wirksam ist.

Ferner ist es günstig, wenn ein Arbeitsbereich vorgesehen ist, bei dem Kräfte ohne wesentliche Beeinflussung durch die mindestens eine Blattfeder von dem Krafteinleitungselement zu dem Kraftausleitungselement leitbar sind. In diesem Falle wirkt der Überlastblock als starrer Ausleger und die wirkende Kräfte werden ohne wesentliche Beeinflussung in die Wägezelle eingeleitet.

Der Erfindung liegt ferner die Aufgabe zugrunde, eine Wägezellenvorrichtung bereitzustellen, welche auf einfache Weise herstellbar ist und welche gegen Überlast geschützt ist.

Diese Aufgabe wird bei der eingangs genannten Wägezellenvorrichtung erfindungsgemäß dadurch gelöst, dass ein erfindungsgemäßer Überlastblock verwendet wird.

Die erfindungsgemäße Wägezellenvorrichtung weist die bereit im Zusammenhang mit dem erfindungsgemäßen Überlastblock beschriebenen Vorteile auf.

Insbesondere ist der Überlastblock mit der Wägezelle verbunden, um eine Krafteinleitung zu ermöglichen.

Vorteilhafterweise ist eine Verbindung an einem beweglichen Teil der Wägezelle angeordnet. Dadurch lassen sich Kräfte über den Überlastblock in den beweglichen Teil der Wägezelle einleiten, um eine Kraftmessung durchführen zu können.

Die Verbindung kann über ein oder mehrere Verbindungselemente wie Schrauben hergestellt sein.

Es ist grundsätzlich auch möglich, dass die Verbindung einstückig ist. Insbesondere ist ein Monoblock des Überlastblocks einstückig mit dem beweglichen Teil der Wägezelle verbunden.

Es ist auch möglich, dass eine Anschlageinrichtung des Überlastblocks auf einen feststehenden Teil der Wägezelle wirkt. Es lassen sich dadurch Überlastkräfte über den feststehenden Teil der Wägezelle ableiten. Bei einer solchen Kraftableitung ist der konstruktive Aufwand gering gehalten, da der Überlastblock sowieso an der Wägezelle angeordnet ist.

Insbesondere ist der Überlastblock an einer Oberseite der Wägezelle angeordnet, wobei der Überlastblock mindestens einen beweglichen Teil der Wägezelle überdeckt. Es lässt sich dadurch eine kompakte Einheit realisieren, welche eine optimierte Funktionsweise aufweist.

Die nachfolgende Beschreibung bevorzugter Ausführungsformen dient im Zusammenhang mit der Zeichnung der näheren Erläuterung der Erfindung. Es zeigen:
- Figur 1: eine perspektivische Darstellung eines Ausführungsbeispiels einer erfindungsgemäßen Wägezellenvorrichtung mit einem Ausführungsbeispiel eines erfindungsgemäßen Überlastblocks;
- Figur 2: eine Seitenansicht der Wägezellenvorrichtung gemäß Figur 1;
- Figur 3: den Überlastblock gemäß Figur 1 bei Verformung; und
- Figur 4: eine schematische (Teil-)Darstellung eines alternativen Ausführungsbeispiels eines Überlastblocks.

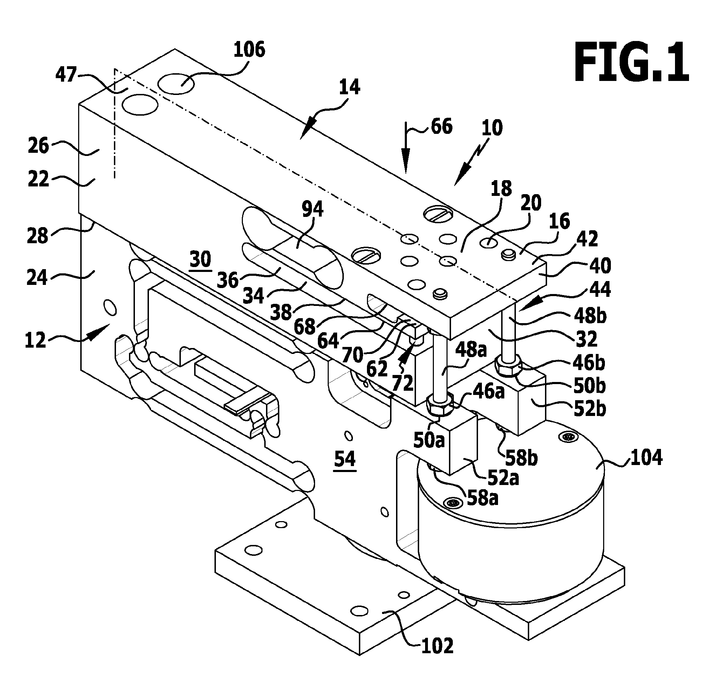

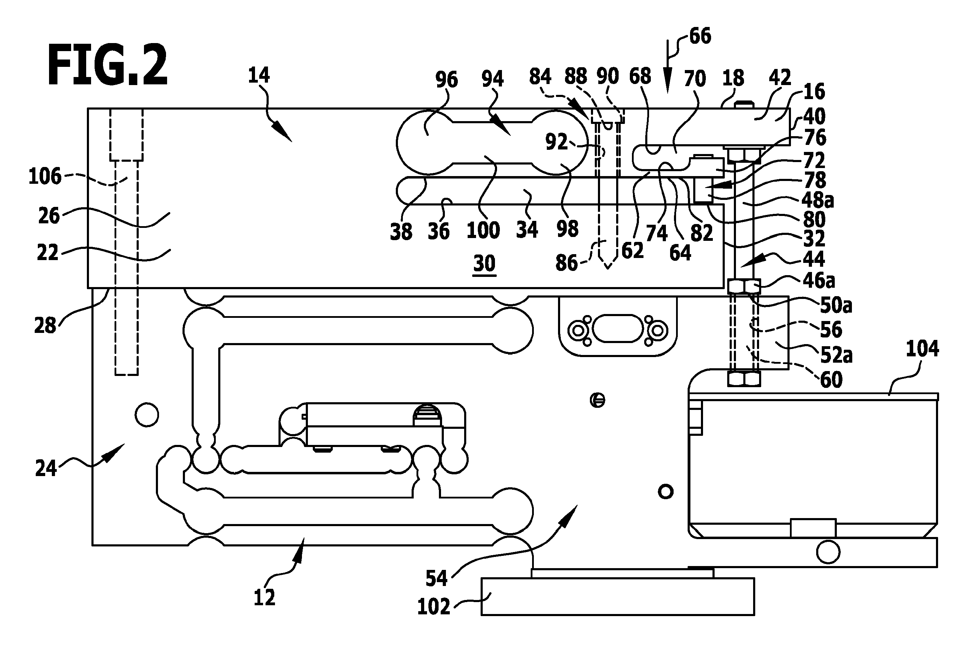

Ein Ausführungsbeispiel einer erfindungsgemäßen Wägezellenvorrichtung, welches in den Figuren 1 und 2 gezeigt und dort mit 10 bezeichnet ist, umfasst eine Wägezelle 12 und einen Überlastblock 14, welcher an der Wägezelle 12 angeordnet ist. Der Überlastblock 14 ist eine Überlastschutzeinrichtung für die Wägezelle 12.

Der Überlastblock 14 weist ein Krafteinleitungselement 16 auf. Über dieses Krafteinleitungselement 16 ist eine Kraft und insbesondere Gewichtskraft einleitbar. Dazu ist das Krafteinleitungselement 16 kraftwirksam mit einem Lastaufnehmer verbindbar. Das Krafteinleitungselement 16 weist dazu einen Krafteinleitungsbereich 18 auf. An diesem Krafteinleitungsbereich 18 ist direkt oder indirekt ein Lastaufnehmer fixierbar. Beispielsweise sind an dem Krafteinleitungsbereich 18 Ausnehmungen 20 angeordnet, welche ein Innengewinde aufweisen, so dass ein Lastaufnehmer anschraubbar ist.

Die Wägezelle 12 ist mit einem Kraftausleitungselement 22 verbunden, wobei die Verbindung an einem beweglichen Teil 24 der Wägezelle erfolgt.

Das Krafteinleitungselement 16 und das Kraftausleitungselement 22 wiederum sind über einen Verbindungsbereich 26 miteinander verbunden. Es ist grundsätzlich möglich, dass das Krafteinleitungselement 16 und das Kraftausleitungselement 22 über Verbindungselemente wie Formschlusselemente (Schrauben oder dergleichen) verbunden sind. Es ist grundsätzlich auch möglich, das eine stoffschlüssige Verbindung wie Klebeverbindung, Schweißverbindung oder Lötverbindung vorliegt. Bei einem bevorzugten Ausführungsbeispiel sind das Krafteinleitungselement 16 und das Kraftausleitungselement 22 über den Verbindungsbereich 26 einstückig miteinander verbunden. Dadurch bildet das Krafteinleitungselement 16 und das Kraftausleitungselement 22 mit dem Verbindungsbereich 26 einen Monoblock.

Das Krafteinleitungselement 16 und das Kraftausleitungselement 22 sind so miteinander verbunden, dass Kräfte, welche über den Krafteinleitungsbereich 18 eingeleitet werden, zu einem Kraftausleitungsbereich 28 des Kraftausleitungselements 22 leitbar sind. Von dem Kraftausleitungsbereich 28, über welchen der Überlastblock 14 mit dem beweglichen Teil 24 der Wägezelle 12 verbunden ist, lassen sich Kräfte in die Wägezelle 12 einleiten.

Das Kraftausleitungselement 22 umfasst einen quaderförmigen Bereich 30, welcher sich von dem Kraftausleitungsbereich 28 weg erstreckt. Dieser Bereich 30 weist ein vorderes Stirnende 32 auf.

Zwischen dem quaderförmigen Bereich 30 und dem Krafteinleitungselement 16 ist ein Freiraum 34 gebildet. Der Freiraum 34 ist zu einer dem vorderen Stirnende 32 des Bereichs 30 abgewandten Seite hin durch den Verbindungsbereich 26 begrenzt. Durch eine Oberfläche 36 des quaderförmigen Bereichs 30 ist der Freiraum 34 zu dem Kraftausleitungselement 22 hin begrenzt. Diese Oberfläche 36 ist bei einem Ausführungsbeispiel im Wesentlichen eben.

Das Krafteinleitungselement 16 ist zungenförmig ausgebildet oberhalb des Freiraums 34 angeordnet. Eine Unterseite 38 des Krafteinleitungselements 16 begrenzt den Freiraum 34 nach oben.

Das Krafteinleitungselement 16 weist ein vorderes Stirnende 40 auf, welches über das vordere Stirnende 32 des Kraftausleitungselements 22 mit einem Bereich 42 hinausragt.

An dem Bereich 42 ist eine Anschlageinrichtung 44 angeordnet, welche Anschlagelemente 46a, 46b aufweist. Diese sind (spiegel-)symmetrisch zu einer Mittelebene 47 des Überlastblocks 14 angeordnet. Dazu sind an dem Bereich 42 Stiftelemente 48a, 48b fixiert. Die Stiftelemente 48a, 48b weisen von dem Bereich 42 des Krafteinleitungselements 16 weg nach unten und laufen an dem vorderen Stirnende 32 des Kraftausleitungselements 22 vorbei. Die Anschlagelemente 46a, 46b sind jeweils an den Stiftelementen 48a, 48b fixiert.

Bei den Anschlagelementen 46a, 46b handelt es sich beispielsweise um Muttern, welche an einem Außengewinde der jeweiligen Stiftelemente 48a, 48b angeordnet sind. Durch eine solche Ausbildung lässt sich der Abstand der Anschlagelemente 46a, 46b zu dem Krafteinleitungselement 16 einstellen.

Die Anschlagelemente 46a, 46b weisen jeweils eine Anschlagfläche 50a, 50b auf, über welche die Anschlageinrichtung 44 an Sperrelemente 52a, 52b eines feststehenden Teils 54 der Wägezelle 12 anlegbar sind. Bei dem gezeigten Ausführungsbeispiel weisen die Sperrelemente 52a, 52b jeweils durchgehende Ausnehmungen 56 auf, durch welche die Stiftelemente 48a, 48b durchgetaucht sind. An einem unteren Ende der Stiftelemente 48a, 48b ist jeweils eine Mutter 58a, 58b angeordnet. Die Mutter 58a, 58b weist einen größeren Durchmesser als die jeweilige Ausnehmung 56 auf. Auch die Anschlagelemente 46a, 46b weisen einen größeren Durchmesser als die jeweilige Ausnehmung 56 auf. In die Ausnehmung 56 ist ein Teil 60 der Stiftelemente 48a, 48b eingetaucht, welcher nach unten so weit beweglich ist, bis die Anschlagelemente 46a, 46b an dem jeweiligen Sperrelement 52a, 52b anschlagen und nach oben so weit beweglich ist, bis die Muttern 58a, 58b an dem jeweiligen Sperrelement 52a, 52b anschlagen.

Durch den Anschlag der Anschlagelemente 46a, 46b an den Sperrelementen 52a, 52b wird eine weitere Zubewegung des Krafteinleitungselements 16 auf das Kraftausleitungselement 22 verhindert. Dadurch wird ein Überlastschutz gegen Druckkräfte erreicht. Durch das Anschlagen der Muttern 58a, 58b an die jeweiligen Sperrelemente 52a, 52b wird eine Wegbewegung des Krafteinleitungselements 16 von dem Kraftausleitungselement 22 nach oben hin gesperrt. Dadurch wird ein Überlastschutz gegen Zugkräfte erreicht.

Die Anschlageinrichtung 44 ist an oder in unmittelbarer Nähe des Krafteinleitungsbereichs 18 angeordnet. Über sie lassen sich Kräfte, welche über den Krafteinleitungsbereich 18 eingekoppelt werden und eine Schwellengröße überschreiten, unter Umgehung des Kraftausleitungsbereichs 28 und damit unter Umgehung des beweglichen Teils 24 der Wägezelle 12 in den feststehenden Teil 54 der Wägezelle 12 einleiten.

An dem Krafteinleitungselement 16 ist (mindestens) eine Blattfeder 62 angeordnet. Diese ist einstückig mit dem Krafteinleitungselement 16 und dadurch mit dem Monoblock, welcher durch das Krafteinleitungselement 16, den Verbindungsbereich 26 und das Kraftausleitungselement 22 gebildet ist, verbunden. Eine Unterseite 64 der Blattfeder 62 begrenzt den Freiraum 34 nach oben zu dem Krafteinleitungselement 16 hin. Die Blattfeder 62 ist unterhalb des Krafteinleitungsbereiches 18 angeordnet. Eine Projektion der Blattfeder 62 in einer Gegenrichtung zu einer Krafteinleitungsrichtung 66 durch eine Last auf den Krafteinleitungsbereich 18 überlappt mindestens teilweise mit dem Krafteinleitungsbereich 18.

Zwischen der Blattfeder 62 und einer Unterseite 68 des Krafteinleitungselements 16 unterhalb des Krafteinleitungsbereichs 18 ist ein Freiraum 70 angeordnet, welcher eine Beweglichkeit der Blattfeder relativ zu dem Kraftleitungselement 16 erlaubt.

Die Blattfeder 62 ragt nicht über das vordere Stirnende 32 des Kraftausleitungselements 22 hinaus.

Die Blattfeder 62 ist über eine Abstützungseinrichtung 72 an der Oberfläche 36 des Kraftausleitungselements 22 abgestützt. Die Blattfeder umfasst einen Bereich 74, über welchen sie an dem Kraftleitungselement 16 angeordnet ist. Auf diesen Bereich 74 folgt ein Bereich 76, welcher eine größere Dicke als der Bereich 74 aufweist, an welchem die Abstützungseinrichtung 72 fixiert ist.

Derjenige Teil der Abstützungseinrichtung 72, welcher von der Blattfeder 62 in Richtung des Kraftausleitungselements 22 ausgeht, ist in dem Freiraum 34 positioniert.

Die Abstützungseinrichtung 72 umfasst beispielsweise eine oder mehrere Stiftelemente 78, welche an dem Bereich 76 angeordnet sind. Das oder die Stiftelemente 78 weisen eine Unterseite 80 auf, welche auf die Oberfläche 36 des Kraftausleitungselements 22 wirkt. Bei entsprechender Einstellung bzw. Ausbildung des Stiftelements 78 lässt sich auf die Blattfeder 62 eine Vorspannkraft ausüben; die Blattfeder 62 wird nach oben in Richtung des Krafteinleitungselements 16 gedrückt.

Es ist insbesondere vorgesehen, dass die Abstützungseinrichtung 72 einstellbar ist, um die Vorspannkraft einstellen zu können und diese beispielsweise an unterschiedliche Wägezellen 12 anpassen zu können. Dazu sind beispielsweise der oder die Stiftelemente 78 in einem Gewinde des Bereichs 76 geführt. Je nach Position des Stiftelements 78 lässt sich der Abstand zwischen der Unterseite 80 des oder der Stiftelemente 78 und einer Unterseite 82 der Blattfeder 62 einstellen.

Durch die Vorspannung der Blattfeder 62 wird eine Kraft auf das Krafteinleitungselement 16 ausgeübt, welche bestrebt ist, dieses von dem Kraftausleitungselement 22 wegzudrücken. Zur Sperrung dieser Wegbewegung ist eine Sperreinrichtung 84 vorgesehen. Diese umfasst ein oder mehrere Sperrelemente 86, welche in dem Krafteinleitungselement 16 verankert sind. Die Sperrelemente 86 weisen Sperrflächen 88 auf, an welche ein jeweiliger Bereich 90 des Krafteinleitungselements 16 anlegbar ist. Insbesondere sind die Sperrelemente 86 über dem Kraftausleitungselement 22 verankerte Schrauben gebildet und die Sperrflächen 88 sind an Schraubenköpfen gebildet. Der Bereich 90 ist ein Oberflächenbereich des Krafteinleitungselements 16 oder ein vertieft angeordneter Flächenbereich. Das Sperrelement 86 ist in dem Krafteinleitungselement 16 durch eine Ausnehmung 92 geführt, welche so definiert ist, dass die Beweglichkeit des Krafteinleitungselements 16 relativ zum Kraftausleitungselement 22 auf das Kraftausleitungselement 22 zu nicht behindert wird.

Das Krafteinleitungselement 16 ist vorzugsweise so ausgebildet, dass die Zubewegung des Krafteinleitungselements 16 auf das Kraftausleitungselement 22 bei Ausübung einer Kraft auf den Krafteinleitungsbereich 18 im Wesentlichen auf einer geraden Linie erfolgt. Vorzugsweise ist die Zubewegung so, dass eine Flächennormale des Krafteinleitungsbereichs 18 seine Richtung nicht ändert, wobei diese Richtung insbesondere parallel zur Krafteinleitungsrichtung 66 ist.

Diese lässt sich dadurch erreichen, dass in dem Krafteinleitungselement 16 eine Ausnehmung 94 angeordnet ist, welche entsprechend ausgebildet ist. Die Ausnehmung 94 ist dabei oberhalb des Freiraums 34 angeordnet und ragt insbesondere nicht in den Verbindungsbereich 26 zwischen dem Krafteinleitungsbereich 16 und dem Kraftausleitungselement 22.

Die Ausnehmung 94 umfasst einen ersten Bereich 96, einen zweiten Bereich 98, und einen dritten Bereich 100. Der erste Bereich 96 und der zweite Bereich 98 sind durch den dritten Bereich 100 verbunden. Die Ausnehmung 94 geht dabei von einer Seitenfläche des Überlastblocks 14 zu der anderen Seitenfläche durch. Der erste Bereich 96 und der zweite Bereich 98 weisen einen größeren Querschnitt auf als der dritte Bereich 100. Insbesondere sind der erste Bereich 96 und der zweite Bereich 98 (hohl-)zylinderförmig und der dritte Bereich 100 ist (hohl-)quaderförmig. Die Ausnehmung 94 hat die Form eines "Hundeknochens".

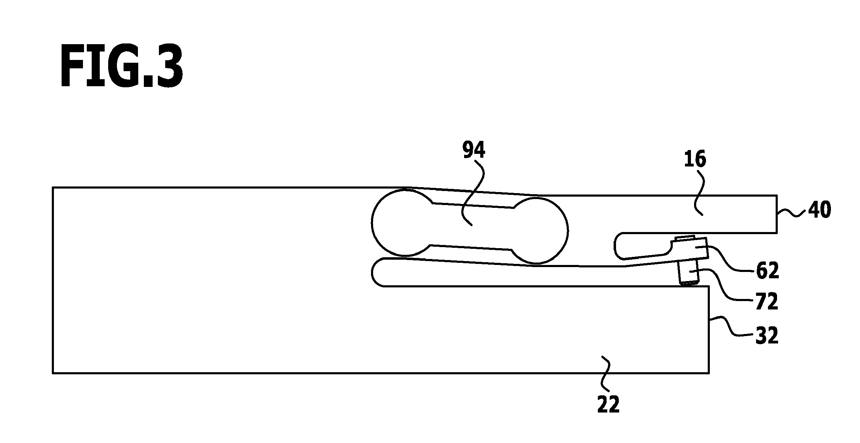

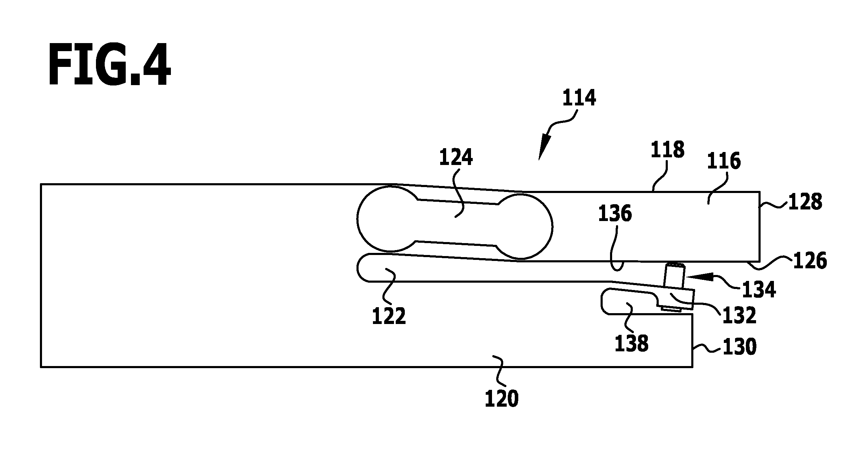

Es sind auch andere Formen für die Ausnehmung 94 möglich. Diese ist insbesondere so ausgestaltet, dass durch die Ausnehmung 94 gebildete Schwächungsstellen am Krafteinleitungselement 16 bei Überlast zu einer parallelogrammartigen Verformung des Überlastblocks 14 und insbesondere des Krafteinleitungselements 16 führen. Die parallelogrammartige Verformung ist in den Figuren 3 und 4 angedeutet.

Bei dem gezeigten Ausführungsbeispiel ist die Sperreinrichtung 84 zwischen der Ausnehmung 94 und der Blattfeder 62 angeordnet.

Die Wägezelle 12 ist konventionell ausgebildet. Der feststehende Teil 54 ist fest an einer Basis 102 montiert, welche beispielsweise an einem Gehäuse einer Waage montiert ist. Der bewegliche Teil 24 ist relativ zum feststehenden Teil 54 beweglich, wobei aus der Bewegung und/oder Position eine Wägesignal ableitbar ist. Elemente des beweglichen Teils 24 sind dabei durch Krafteinleitung elastisch verformbar. Durch den Überlastblock 14 lässt sich sicherstellen, dass keine Kräfte in den beweglichen Teil 24 der Wägezelle 12 einleitbar sind, welche zu einer plastischen Verformung von Hebeln und Gelenken der Wägezelle 12 führen.

Die Wägezelle 12 kann eine elektromagnetische Kompensation aufweisen. Dazu ist beispielsweise eine Tauchspule 104 vorgesehen, welche an dem feststehenden Teil 54 der Wägezelle 12 angeordnet ist. Die Tauchspule 104 taucht beispielsweise in einen Luftspalt eines Permanentmagneten ein, wobei der Permanentmagnet feststehend angeordnet ist. Die Tauchspule steht dabei mit dem beweglichen Teil 24 der Wägezelle 12 in wirksamer Verbindung.

Die Wägezelle 12 kann auch gemäß anderen Wägeprinzipien ausgebildet sein. Sie kann beispielsweise einen oder mehrere Dehnungsmessstreifen umfassen, auf optischer, kapazitiver, magnetostriktiver usw. Messung beruhen.

Der Überlastblock 14 ist oberhalb der Wägezelle 12 angeordnet und überdeckt diese mindestens teilweise. Der Überlastblock 14 ist an dem Kraftausleitungsbereich 28 mit der Wägezelle 12 durch eine oder mehrere Schrauben 106 verbunden.

Es ist grundsätzlich auch möglich, dass der Überlastblock 14 beispielsweise stoffschlüssig über Schweißen oder Löten mit der Wägezelle 12 an dem Kraftausleitungsbereich 28 verbunden ist.

Es ist auch möglich, dass der Überlastblock 14 mit dem beweglichen Teil 24 der Wägezelle 12 am Kraftausleitungsbereich 28 einstückig verbunden ist.

Die erfindungsgemäße Wägezellenvorrichtung 10 und der erfindungsgemäße Überlastblock 14 funktionieren wie folgt:

Die Wägezelle 12 weist einen bestimmten Wägebereich auf, in dem das bewegliche Teil 24 durch elastische Verformung beweglich ist und in dem eine genaue Gewichtskraftmessung möglich ist. Bei konkreten Ausführungsbeispielen endet dieser Wägebereich bei ca. 750 g oder bei ca. 1500 g. An diesen Wägebereich schließt sich ein Bereich an, bei dem eine elastische Verformung an dem beweglichen Teil 24 erfolgt, wobei jedoch eine Gewichtsmessung nicht mehr genau möglich ist. An diesen Bereich schließt sich ein Bereich der plastischen Verformung an; wenn eine Kraft einer bestimmten Größe über den Kraftausleitungsbereich 28 auf die Wägezelle 12 ausgeübt wird, dann tritt eine dauerhafte plastische Verformung an dem beweglichen Teil 24 ein. Dadurch wird die Wägezelle 12 dauerhaft beschädigt. Bei einem Ausführungsbeispiel ist dieser Überlastbereich erreicht, wenn eine Gewichtskraft entsprechend einer Masse von 10 kg auf den beweglichen Teil 24 der Wägezelle 12 ausgeübt wird.

Es ist die Aufgabe des Überlastblocks 14 zu vermeiden, dass eine solche zu einer Beschädigung führende Kraft von der Wägezelle 12 abgehalten wird. Der Überlastblock 14 ist dabei so ausgebildet bzw. er ist vorzugsweise so eingestellt, dass ein Sicherheitsabstand zu der erwähnten Schwenkkraft der plastischen Verformung vorliegt. Beispielsweise ist der Sicherheitsabstand so eingestellt, dass bei einer Kraft, welche einer Masse von 6,5 kg entspricht, größere Kräfte von dem beweglichen Teil 24 der Wägezelle 12 abgehalten werden.

Die Blattfeder 62 ist über die Abstützungseinrichtung 72 vorgespannt. Die Vorspannung ist derart, dass in dem oben erwähnten Wägemessbereich die Blattfeder 62 keinen relevanten Einfluss nimmt, während bei größeren Kräften diese von dem beweglichen Teil 24 der Wägezelle 12 abgehalten werden.

Kräfte (insbesondere Gewichtskräfte) werden über den Krafteinleitungsbereich 18 mit einer Krafteinleitungsrichtung 66 in das Krafteinleitungselement 16 eingekoppelt. Solange diese Kräfte unterhalb der Vorspannungskraft der Blattfeder 62 liegen, erfolgt eine im Wesentlichen vollständige Kraftumleitung in den Verbindungsbereich 26 und von dort in den Kraftausleitungsbereich 28 und in den beweglichen Teil 24 der Wägezelle 12. In diesem Falle (dem "normalen" Wägebereich) ist der Überlastblock 14 ein steifer Ausleger, durch welchen Kräfte ohne wesentliche Umleitung bzw. Absorption an der Blattfeder 62 in dem beweglichen Teil 24 der Wägezelle 12 einleitbar sind.

Wenn größere Kräfte ausgeübt werden, dann bewegt sich das Krafteinleitungselement 16 auf das Kraftausleitungselement 22 zu, wie in Figur 3 gezeigt. Es muss dabei die elastische Kraft der Blattfeder 62 überwunden werden. Diese wird nach oben in den Freiraum 70 gedrückt. Durch die Zubewegung des Krafteinleitungselements 16 auf das Kraftausleitungselement 22 zu werden die Anschlagelemente 46a, 46b der Anschlageinrichtung 44 auf die Sperrelemente 52a, 52b zu gedrückt. Bei Erreichen einer bestimmten Kraftschwelle, die einen Sicherheitsabstand zur Kraftschwelle der plastischen Verformung des beweglichen Teils 24 der Wägezelle 12 aufweist, schlagen diese an den Sperrelementen 52a, 52b an. Dies entspricht dem in Figur 3 gezeigten Zustand des Überlastblocks 14. Es werden dann die Kräfte direkt von dem Krafteinleitungselement 16 über die Anschlageinrichtung 44 in den feststehenden Teil 54 der Wägezelle 12 eingeleitet und dabei von dem beweglichen Teil 24 der Wägezelle 12 abgehalten bzw. so weit abgehalten, dass keine plastische Verformung an dem beweglichen Teil 24 erfolgen kann.

Die Ausnehmung 94 ermöglicht dabei eine geradlinige Zubewegung des Krafteinleitungselements 16 auf das Kraftausleitungselement 22 zu.

Die Blattfeder 62 hat auch eine Dämpfungswirkung, insbesondere gegen kurze schnelle Schläge auf den Krafteinleitungsbereich 18.

Der Überlastblock 14 mit der daran fixierten Blattfeder 62, wobei die Fixierung insbesondere einstückig ist, lässt sich auf einfache Weise herstellen. Durch eine Einstellbarkeit der Anschlageinrichtung 44 und der Abstützungseinrichtung 72 lässt sich der Überlastblock 14 in seiner Überlastschutzfunktion auf einfache Weise an die speziellen Gegebenheiten der Wägezelle 12 anpassen, insbesondere an verschiedene Wägebereiche.

Durch die Positionierung der Anschlageinrichtung 44, welche vor dem vorderen Stirnende 32 des Kraftausleitungselements 22 angeordnet ist, lässt sich die Wägezellenvorrichtung 10 mit geringen Querabmessungen realisieren. Damit ist die Wägezellenvorrichtung 10 auch bei engen Raumverhältnissen einsetzbar.

Ein Ausführungsbeispiel eines alternativen Überlastblocks, welches in Figur 4 schematisch gezeigt und dort mit 114 bezeichnet ist, umfasst ein Krafteinleitungselement 116 mit einem Krafteinleitungsbereich 118. Das Krafteinleitungselement 116 ist mit einem Kraftausleitungselement 120 insbesondere einstückig verbunden. Zwischen dem Krafteinleitungselement 116 und dem Kraftausleitungselement 120 liegt ein Freiraum 122, welcher eine Zubewegung des Krafteinleitungselement 116 auf das Kraftausleitungselement 120 erlaubt.

Das Krafteinleitungselement 116 weist einen Ausnehmung 124 auf, welche der Ausnehmung 94 des Überlastblocks 14 entspricht.

Das Krafteinleitungselement 118 ragt mit einem Bereich 126 über das Kraftausleitungselement 120 hinaus. Ein vorderes Stirnende 128 des Krafteinleitungselements 116 ist dadurch vor einem vorderen Stirnende 130 des Kraftausleitungselements 120 angeordnet.

An dem Kraftausleitungselement 120 ist insbesondere einstückig eine Blattfeder 132 angeordnet. Diese Blattfeder 132 stützt sich über eine Abstützungseinrichtung 134 an einem dem Kraftausleitungselement 120 zugewandten Bereich 136 des Krafteinleitungselements 116 ab. Der Bereich 136 begrenzt dabei den Freiraum 122. Die Blattfeder 132 begrenzt den Freiraum 122 nach unten.

Die Abstützungseinrichtung 134 ist grundsätzlich gleich ausgebildet wie die Abstützungseinrichtung 72 des Überlastblocks 14.

Zwischen der Blattfeder 132 und dem Kraftausleitungselement 120 ist ein Freiraum 138 gebildet. Dieser Freiraum 138 ermöglicht eine relative Beweglichkeit der Blattfeder 132 zu dem Kraftausleitungselement 120.

Die Blattfeder 132 ist mit einem vorderen Stirnende gegenüber dem vorderen Stirnende 128 des Krafteinleitungselements 116 zurückgesetzt. Beispielsweise ist das vordere Stirnende der Blattfeder 132 fluchtend zu dem vorderen Stirnende 130 des Kraftausleitungselements 120 anordnet.

An dem Bereich 126 des Krafteinleitungselements 116 ist vor dem vorderen Stirnende 130 des Kraftausleitungselements 120 eine Anschlageinrichtung angeordnet (in Figur 4 nicht gezeigt), welche der Anschlageinrichtung 44 des Überlastblocks 14 entspricht und grundsätzlich gleich ausgebildet ist.

Die Blattfeder 132 ist unterhalb des Krafteinleitungsbereichs 118 des Krafteinleitungselements 116 angeordnet. Eine Projektion der Blattfeder 132 in Gegenrichtung zu einer Krafteinleitungsrichtung (entsprechend der Krafteinleitungsrichtung 66 gemäß Figur 2) liegt innerhalb des Krafteinleitungsbereichs 118.

Die Blattfeder 132 ist über die Abstützungseinrichtung 134 vorgespannt. Durch die Vorspannung wird sie in Richtung des Kraftausleitungselements 120, an welchem sie sitzt, gedrückt.

Der Überlastblock 114 funktioniert grundsätzlich gleich wie der Überlastblock 14. Über den Krafteinleitungsbereich 118 werden Kräfte und insbesondere Gewichtskräfte eingeleitet. Die Blattfeder 132 stützt sich über die Abstützungseinrichtung 134 an dem Krafteinleitungselement 116 ab und ist vorgespannt. Durch die Vorspannung wird die Blattfeder 132 von dem Krafteinleitungselement 116 weg gedrückt. Wenn das Krafteinleitungselement 116 durch Ausübung einer Kraft auf den Krafteinleitungsbereich 118 auf das Kraftausleitungselement 120 zu bewegt wird (wenn eine bestimmte Kraftschwelle erreicht wird), dann kann sich die Anschlageinrichtung 44 an dem entsprechenden Sperrelement 52a, 52b der Wägezelle 12 abstützen und Kräfte können unter Umgehung des Kraftausleitungselements 120 abgeleitet werden.

Durch die Abstützung der Blattfeder 132 an dem Krafteinleitungselement 116 wird auf dieses eine Kraft ausgeübt, welche der Vorspannungskraft entspricht. Diese Kraft muss zunächst überwunden werden, damit sich das Krafteinleitungselement 116 überhaupt bewegen kann.

Ansonsten funktioniert der Überlastblock 114 wie oben anhand des Überlastblocks 14 beschrieben.

## Patentansprüche

1. Überlastblock für eine Wägezelle (12), umfassend ein Krafteinleitungselement (16; 116) zur kraftwirksamen Verbindung mit einer Last, und ein Kraftausleitungselement (22; 120) zur kraftwirksamen Verbindung mit der Wägezelle (12), wobei zwischen dem Krafteinleitungselement (16; 116) und dem Kraftausleitungselement (22; 120) ein Freiraum (34; 122) angeordnet ist und das Krafteinleitungselement (16) relativ zum Kraftausleitungselement (22; 120) beweglich ist,
**gekennzeichnet durch** mindestens eine Blattfeder (62; 132), welche an dem Krafteinleitungselement (16) oder dem Kraftausleitungselement (120) angeordnet ist, und **durch** eine Abstützungseinrichtung (72; 134), **durch** welche die mindestens eine Blattfeder (62; 132) an dem Kraftausleitungselement (22) oder an dem Krafteinleitungselement (116) abgestützt ist.

2. Überlastblock nach Anspruch 1, **dadurch gekennzeichnet, dass** die mindestens eine Blattfeder (62; 132) einstückig am Krafteinleitungselement (16) oder am Kraftausleitungselement (120) angeordnet ist.

3. Überlastblock nach Anspruch 1 oder 2, **dadurch gekennzeichnet, dass** die mindestens eine Blattfeder (62; 132) von dem Kraftausleitungselement (22) weg oder von dem Krafteinleitungselement (120) weg beweglich ist.

4. Überlastblock nach einem der vorangehenden Ansprüche, **dadurch gekennzeichnet, dass** die mindestens eine Blattfeder (62; 132) unterhalb eines Krafteinleitungsbereiches (18; 118) des Krafteinleitungselements (16; 116) angeordnet ist.

5. Überlastblock nach einem der vorangehenden Ansprüche, **dadurch gekennzeichnet, dass** die Projektion der mindestens einen Blattfeder (62; 132) in einer Krafteinleitungs-Gegenrichtung mindestens teilweise einen Krafteinleitungsbereich (18; 118) überlappt.

6. Überlastblock nach einem der vorangehenden Ansprüche, **dadurch gekennzeichnet, dass** das Krafteinleitungselement (16; 116) ein vorderes Stirnende (40; 128) aufweist, welches über ein vorderes Stirnende (32; 130) des Kraftausleitungselements (22; 120) hinausragt.

7. Überlastblock nach Anspruch 6, **dadurch gekennzeichnet, dass** ein vorderes Stirnende der mindestens einen Blattfeder (62; 132) gegenüber dem vorderen Stirnende (40; 128) des Krafteinleitungselements (16; 116) zurückgesetzt ist.

8. Überlastblock nach Anspruch 6 oder 7, **dadurch gekennzeichnet, dass** an oder in der Nähe des vorderen Endes (40; 128) des Krafteinleitungselements (16; 116) eine Anschlageinrichtung (44) angeordnet ist, durch welche die Beweglichkeit des Krafteinleitungselements (16; 116) auf das Kraftausleitungselement (22; 120) zu sperrbar ist.

9. Überlastblock nach Anspruch 8, **dadurch gekennzeichnet, dass** die Anschlageinrichtung (44) an einem Bereich (42; 126) des Krafteinleitungselements (16; 116) angeordnet ist, welcher über das Kraftausleitungselement (22; 120) hinausragt.

10. Überlastblock nach Anspruch 8 oder 9, **dadurch gekennzeichnet, dass** die Anschlageinrichtung (44) so ausgebildet ist, dass bei einem Anschlag Kräfte von dem Krafteinleitungselement (16; 116) unter Umgehung des Kraftausleitungselements (22; 120) ableitbar sind.

11. Überlastblock nach einem der Ansprüche 8 bis 10, **dadurch gekennzeichnet, dass** die Anschlageinrichtung (44) an oder in der Nähe eines Krafteinleitungsbereichs (18; 118) des Krafteinleitungselements (16; 116) angeordnet ist.

12. Überlastblock nach einem der Ansprüche 8 bis 11, **dadurch gekennzeichnet, dass** die Anschlageinrichtung (44) ein oder mehrere Anschlagelemente (46a, 46b) aufweist, deren Abstand zu dem Krafteinleitungselement (16; 116) einstellbar ist.

13. Überlastblock nach Anspruch 12, **dadurch gekennzeichnet, dass** Anschlagelemente (44a, 44b) symmetrisch zu einer Mittelebene (47) des Überlastblocks angeordnet sind.

14. Überlastblock nach einem der Ansprüche 8 bis 13, **dadurch gekennzeichnet, dass** die Anschlageinrichtung (44) so ausgebildet ist, dass ein Überlastschutz gegenüber Druckkräften und Zugkräften erreicht ist.

15. Überlastblock nach einem der Ansprüche 12 bis 14, **dadurch gekennzeichnet, dass** mindestens ein Anschlagelement (44a, 44b) durch eine oder mehrere Muttern auf einem Gewinde gebildet ist.

16. Überlastblock nach einem der vorangehenden Ansprüche, **dadurch gekennzeichnet, dass** die mindestens eine Blattfeder (62; 132) vorgespannt ist.

17. Überlastblock nach Anspruch 16, **dadurch gekennzeichnet, dass** die mindestens eine Blattfeder (62; 132) so vorgespannt ist, dass sie mittels der Abstützungseinrichtung (72; 134) eine Kraft auf das Kraftausleitungselement (22) oder das Krafteinleitungselement (116) ausübt.

18. Überlastblock nach Anspruch 16 oder 17, **dadurch gekennzeichnet, dass** die mindestens eine Blattfeder (62; 132) mittels der Abstützungseinrichtung (72; 134) vorgespannt ist.

19. Überlastblock nach einem der Ansprüche 16 bis 18, **dadurch gekennzeichnet, dass** die Vorspannungskraft der mindestens einen Blattfeder (62; 132) einstellbar ist.

20. Überlastblock nach einem der vorangehenden Ansprüche, **dadurch gekennzeichnet, dass** die Abstützungseinrichtung (72; 132) eine oder mehrere Schrauben (78) aufweist, wobei ein Schraubenende (80) auf das Kraftausleitungselement (22) oder das Krafteinleitungselement (116) wirkt.

21. Überlastblock nach einem der vorangehenden Ansprüche, **dadurch gekennzeichnet, dass** die mindestens eine Blattfeder (62; 132) einen verdickten Bereich (76) zur Fixierung der Abstützungseinrichtung (72; 134) aufweist.

22. Überlastblock nach einem der vorangehenden Ansprüche, **dadurch gekennzeichnet, dass** zwischen der mindestens einen Blattfeder (62; 132) und einem Bereich (68) des Krafteinleitungselements (16) oder einem Bereich des Kraftausleitungselements (120) unterhalb eines Krafteinleitungsbereichs (18; 118) ein Freiraum (70; 138) angeordnet ist.

23. Überlastblock nach einem der vorangehenden Ansprüche, **gekennzeichnet durch** eine Sperreinrichtung (84), welche die Wegbewegung des Krafteinleitungselements (16; 116) vom Kraftausleitungselement (22; 120) sperrt.

24. Überlastblock nach einem der vorangehenden Ansprüche, **dadurch gekennzeichnet, dass** das Krafteinleitungselement (16; 116) einstückig mit dem Kraftausleitungselement (22; 120) verbunden ist.

25. Überlastblock nach einem der vorangehenden Ansprüche, **gekennzeichnet durch** einen Verbindungsbereich (26), welcher das Krafteinleitungselement (16; 116) und das Kraftausleitungselement (22; 120) verbindet und **durch** welchen Kräfte von dem Krafteinleitungselement (16; 116) zum Kraftausleitungselement (22; 120) leitbar sind.

26. Überlastblock nach Anspruch 25, **dadurch gekennzeichnet, dass** der Verbindungsbereich (26) den Freiraum (34; 122) zu einer Seite hin begrenzt.

27. Überlastblock nach einem der vorangehenden Ansprüche, **dadurch gekennzeichnet, dass** das Krafteinleitungselement (16; 116) so ausgebildet ist, dass die Bewegungskurve eines Krafteinleitungsbereichs (18; 118) des Krafteinleitungselements (16; 116) im Wesentlichen eine Gerade ist.

28. Überlastblock nach Anspruch 27, **dadurch gekennzeichnet, dass** das Krafteinleitungselement (16; 116) eine Ausnehmung (94) aufweist.

29. Überlastblock nach Anspruch 28, **dadurch gekennzeichnet, dass** die Ausnehmung (94) einen ersten Bereich (96) und einen zweiten Bereich (98) aufweist, welche durch einen dritten Bereich (100) verbunden ist, wobei der erste Bereich (96) und der zweite Bereich (98) einen größeren Querschnitt als der dritte Bereich (100) aufweisen.

30. Überlastblock nach einem der vorangehenden Ansprüche, **gekennzeichnet durch** einen Arbeitsbereich, bei dem bei Überschreiten einer Kraftschwelle Kräfte von einem kraftsensitiven Bereich (24) der Wägezelle (12) abgehalten werden.

31. Überlastblock nach einem der vorangehenden Ansprüche, **gekennzeichnet durch** einen Arbeitsbereich, bei dem Kräfte ohne wesentliche Beeinflussung **durch** die mindestens eine Blattfeder (62; 132) von dem Krafteinleitungselement (16; 116) zu dem Kraftausleitungselement (22; 120) leitbar sind.

32. Wägezellenvorrichtung, umfassend eine Wägezelle (12) und eine Überlastschutzvorrichtung, bei welcher die Überlastschutzvorrichtung ein Überlastblock (14; 114) gemäß einem der vorangehenden Ansprüche ist.

33. Wägezellenvorrichtung nach Anspruch 32, **dadurch gekennzeichnet, dass** der Überlastblock (14; 114) mit einer Wägezelle (12) verbunden ist.

34. Wägezellenvorrichtung nach Anspruch 33, **dadurch gekennzeichnet, dass** eine Verbindung an einem beweglichen Teil (24) der Wägezelle (12) angeordnet ist.

35. Wägezellenvorrichtung nach Anspruch 33 oder 34, **dadurch gekennzeichnet, dass** die Verbindung über ein oder mehrere Verbindungselemente (106) hergestellt ist.

36. Wägezellenvorrichtung nach Anspruch 33 oder 34, **dadurch gekennzeichnet, dass** die Verbindung einstückig ist.

37. Wägezellenvorrichtung nach einem der Ansprüche 32 bis 36, **dadurch gekennzeichnet, dass** eine Anschlageinrichtung (44) des Überlastblocks (14; 114) auf einem feststehenden Teil (54) der Wägezelle (12) wirkt.

38. Wägezellenvorrichtung nach einem der Ansprüche 32 bis 37, **dadurch gekennzeichnet, dass** der Überlastblock (14; 114) an einer Oberseite der Wägezelle (12) angeordnet ist, wobei der Überlastblock (14; 114) mindestens einen beweglichen Teil (24) der Wägezelle (12) überdeckt.
